(19) Europäisches Patentamt
European Patent Office
Office européen des brevets

(11) EP 4 686 736 A1

(12) EUROPEAN PATENT APPLICATION

(43) Date of publication:
**04.02.2026 Bulletin 2026/06**

(21) Application number: **25189901.9**

(22) Date of filing: **16.07.2025**

(51) International Patent Classification (IPC):
***C08K 7/06*** $^{(2006.01)}$ ***C08L 77/06*** $^{(2006.01)}$
***F16C 33/20*** $^{(2006.01)}$

(52) Cooperative Patent Classification (CPC):
(C-Sets available)
**C08K 7/06; C08L 77/06; F16C 33/201;** C08K 3/04
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.07.2024 JP 2024122637**

(71) Applicant: **Sumitomo Chemical Co., Ltd.**
**Tokyo 103-6020 (JP)**

(72) Inventors:
- **NOJIMA, Shiki**
**Ichihara-shi, Chiba 299-0195 (JP)**
- **KOMORI, Shohei**
**Ichihara-shi, Chiba 299-0195 (JP)**

(74) Representative: **Vossius & Partner**
**Patentanwälte Rechtsanwälte mbB**
**Siebertstrasse 3**
**81675 München (DE)**

# (54) RESIN COMPOSITION AND MOLDED BODY

(57) There are provided a resin composition that enables reduction of a molded body having both enhanced wear resistance and durability, and a molded body obtained using this resin composition as a molding material. A resin composition containing a semi-aromatic polyamide having a structural unit represented by formula (1), maleic anhydride-modified ultra-high molecular weight polyethylene, and a carbon fiber. In formula (1), $Ar^1$ represents a phenylene group or a naphthylene group, and a plurality of $Ar^1$s of the semi-aromatic polyamide may be the same as or different from one another. p is an integer of 4 to 12. A content mass ratio of the carbon fiber to the semi-aromatic polyamide is 0.25 or more and 0.95 or less, a content mass ratio of the carbon fiber to the maleic anhydride-modified ultra-high molecular weight polyethylene is 0.8 or more and 6.5 or less.

[Formula 1]

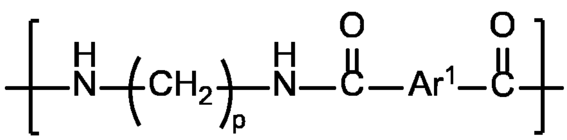

(1)

EP 4 686 736 A1

(52) Cooperative Patent Classification (CPC): (Cont.)

C-Sets
**C08L 77/06, C08L 51/06, C08K 7/06**

## Description

Technical Field

The present disclosure relates to a resin composition and a molded body.

Background Art

A polyamide is known to have excellent wear resistance and strength and is widely used as a molding material for various members such as mechanical components.

For example, Patent Literature 1 discloses a resin composition for extrusion molding containing a semi-aromatic polyamide and a carbodiimide compound in a particular ratio.

Citation List

Patent Literature

Patent Literature 1: Japanese Patent Laid-Open No. 2023-10587

Summary of Invention

Problems to be Solved by Invention

However, there is a need for further improvements in the durability and wear resistance at a high contact pressure of a molded body obtained using, as a molding material, a conventional resin composition containing a polyamide resin when the conventional resin composition is applied to a use for a mechanical component such as a gear.

An object of the present disclosure is to provide a resin composition that enables production of a molded body having both enhanced durability and wear resistance at a high contact pressure and a molded body obtained using this resin composition as a molding material. Means to Solve the Problems

The present disclosure includes the following modes in order to solve the above problem.

[1] A resin composition comprising: a semi-aromatic polyamide having a structural unit represented by the following formula (1); maleic anhydride-modified ultra-high molecular weight polyethylene; and a carbon fiber, wherein a content mass ratio of the carbon fiber to the semi-aromatic polyamide is 0.25 or more and 0.95 or less, and a content mass ratio of the carbon fiber to the maleic anhydride-modified ultra-high molecular weight polyethylene is 0.8 or more and 6.5 or less.

[Formula 1]

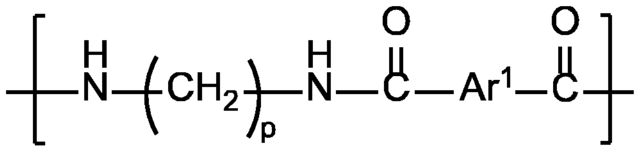

(1)

wherein $Ar^1$ represents a phenylene group or a naphthylene group, and a plurality of $Ar^1$s of the semi-aromatic polyamide are the same as or different from one another; and p is an integer of 4 to 12.

[2] The resin composition according to [1], wherein the semi-aromatic polyamide is a semi-aromatic polyamide having a structural unit wherein $Ar^1$ represents a 1,4-phenylene group and p is 9 or 10 in formula (1).

[3] The resin composition according to [1] or [2], wherein the semi-aromatic polyamide has a melt mass flow rate (MFR) of 1 g/10 min or more and 300 g/10 min or less, as measured in accordance with JIS K 7210 at a test temperature of 330°C with a load of 2160 g.

[4] The resin composition according to any one of [1] or [3], wherein a content of the carbon fiber is 20% by mass or more based on the total mass of the resin composition.

[5] The resin composition according to any one of [1] or [4], wherein the maleic anhydride-modified ultra-high molecular weight polyethylene has a limiting viscosity of 10 dL/g or more and 40 dL/g or less.

[6] A molded body comprising the resin composition according to any one of [1] to [5].

## Effects of Invention

According to the present disclosure, it is possible to provide a resin composition that enables production of a durable molded body having a reduced wear loss at a high contact pressure and a molded body obtained using this resin composition as a molding material.

## Brief Description of Drawings

[Figure 1] Figure 1 is a top view obtained by taking a photograph of an example of resin gears produced in Examples.

## Embodiments for Carrying out Invention

### (Resin composition)

One embodiment of a resin composition contains: a semi-aromatic polyamide having a structural unit represented by formula (1); maleic anhydride-modified ultra-high molecular weight polyethylene; and a carbon fiber.

In the resin composition of the present embodiment, the content mass ratio of the carbon fiber to the semi-aromatic polyamide is 0.25 or more and 0.95 or less. In addition, in the resin composition of the present embodiment, the content mass ratio of the carbon fiber to the maleic anhydride-modified ultra-high molecular weight polyethylene is 0.8 or more and 6.5 or less.

### <Semi-aromatic polyamide>

The semi-aromatic polyamide in the present embodiment is a semi-aromatic polyamide having a structural unit represented by the following formula (1).

[Formula 2]

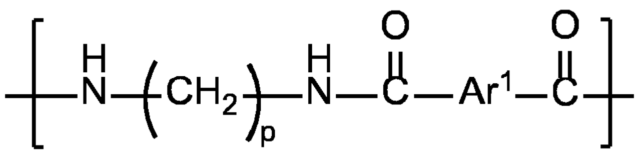

(1)

wherein $Ar^1$ represents a phenylene group or a naphthylene group, and a plurality of $Ar^1$s of the semi-aromatic polyamide are the same as or different from one another; and p is an integer of 4 to 12.

The semi-aromatic polyamide can be obtained as a polymerized product of an aliphatic diamine and an aromatic dicarboxylic acid.

The aliphatic diamine may be an aliphatic diamine having 4 to 12 carbon atoms. Examples of the aliphatic diamine having 4 to 12 carbon atoms include 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine. The aliphatic diamines may be used singly or in combinations of two or more.

Examples of the aromatic dicarboxylic acid include terephthalic acid, phthalic acid, isophthalic acid, and naphthalene dicarboxylic acid. The aromatic dicarboxylic acids may be used singly or in combinations of two or more.

From the viewpoint that a molded body to be obtained has excellent durability and heat resistance, $Ar^1$ in the above formula (1) represents a phenylene group or a naphthylene group, and a plurality of $Ar^1$s of the semi-aromatic polyamide may be the same as or different from one another, and from the viewpoint that a molded body to be obtained has more excellent low water absorbency, p may be 9 or 10.

From the viewpoint that a molded body to be obtained has more excellent durability, $Ar^1$ in the above formula (1) represents a phenylene group or a naphthylene group, and a plurality of $Ar^1$s of the semi-aromatic polyamide may be the same as or different from one another. From the viewpoint that the effect of improving the durability and the wear resistance at a high contact pressure due to the use of the maleic anhydride-modified ultra-high molecular weight polyethylene in combination is even more excellent, p may be 10.

Examples of the phenylene group as $Ar^1$ include a 1,4-phenylene group and a 1,3-phenylene group. Examples of the naphthylene group as $Ar^1$ include a 2,6-naphthylene group and a 2,7-naphthylene group.

Preferably, in the above formula (1), $Ar^1$ represents a 1,4-phenylene group, and p may be an integer of 4 to 12. More preferably, in the above formula (1), $Ar^1$ represents a 1,4-phenylene group, and p may be 9 or 10. Particularly

preferably, in the above formula (1), $Ar^1$ represents a 1,4-phenylene group, and p may be 10.

In the semi-aromatic polyamide, the content of the structural unit represented by the above formula (1) is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein $Ar^1$ represents a phenylene group or a naphthylene group, a plurality of $Ar^1$ of the semi-aromatic polyamide may be the same as or different from one another, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein $Ar^1$ represents a 1,4-phenylene group, and p is 9 or 10 is preferably 40% or more, more preferably 80% or more, and even more preferably 90% or more, based on the total number of units (100%) of all the structural units in the semi-aromatic polyamide.

In the semi-aromatic polyamide, the content of the structural unit represented by the above formula (1) wherein $Ar^1$ represents a 1,4-phenylene group, and p is 10 is preferably 40% or more, more preferably 80% or more, and even more preferably 90% or more, based on the total number of units (100%) of all the structural units in the semi-aromatic polyamide.

The melt mass flow rate (MFR) of the semi-aromatic polyamide, as measured in accordance with JIS K 7210 at a test temperature of 330°C with a load of 2160 g, may be 1 g/10 min or more, may be 3 g/10 min or more, or may be 5 g/10 min or more. On the other hand, the MFR of the semi-aromatic polyamide, as measured in accordance with JIS K 7210 at a test temperature of 330°C with a load of 2160 g, may be 300 g/10 min or less, may be 250 g/10 min or less, or may be 200 g/10 min or less.

The above-exemplified upper limit values and lower limit values of the MFR of the semi-aromatic polyamide can be freely combined.

The MFR of the semi-aromatic polyamide, as measured in accordance with JIS K 7210 at a test temperature of 330°C with a load of 2160 g, may be 1 g/10 min or more and 300 g/10 min or less, may be 3 g/10 min or more and 250 g/10 min or less, or may be 5 g/10 min or more and 250 g/10 min or less, as an example.

As another aspect, the MFR of the semi-aromatic polyamide, as measured in accordance with JIS K 7210 at a test temperature of 320°C with a load of 2160 g, may be 1 g/10 min or more, may be 3 g/10 min or more, or may be 5 g/10 min or more. On the other hand, the MFR of the semi-aromatic polyamide, as measured in accordance with JIS K 7210 at a test temperature of 320°C with a load of 2160 g, may be 300 g/10 min or less, may be 250 g/10 min or less, or may be 200 g/10 min or less.

The above-exemplified upper limit values and lower limit values of the MFR of the semi-aromatic polyamide can be freely combined.

The MFR of the semi-aromatic polyamide, as measured in accordance with JIS K 7210 at a test temperature of 320°C with a load of 2160 g, may be 1 g/10 min or more and 300 g/10 min or less, may be 3 g/10 min or more and 250 g/10 min or less, or may be 5 g/10 min or more and 200 g/10 min or less, as an example.

The resin composition containing a semi-aromatic polyamide having a MFR in the above numerical value ranges can exhibit even more excellent durability.

The MFR of the semi-aromatic polyamide can be controlled, for example, by appropriately adjusting the conditions relating to the reaction efficiency of the polymerization reaction, such as raw material monomers, a catalyst, and reaction time for example.

The resin composition of the present embodiment may contain one of the semi-aromatic polyamides or may contain two or more of the semi-aromatic polyamides.

In the resin composition of the present embodiment, the content of the semi-aromatic polyamide is, for example, 40% by mass or more, and may be 40% by mass or more and 80% by mass or less, or may be 45% by mass or more and 75% by mass or less, based on the total mass of the resin composition.

<Maleic anhydride-modified ultra-high molecular weight polyethylene>

The maleic anhydride-modified ultra-high molecular weight polyethylene in the present embodiment is a polymerized product obtained by modifying ultra-high molecular weight polyethylene with maleic anhydride, the polymerized product having a limiting viscosity of 10 dL/g or more.

The limiting viscosity of the maleic anhydride-modified ultra-high molecular weight polyethylene is preferably 10 dL/g or more and 40 dL/g or less, more preferably 15 dL/g or more and 35 dL/g or less, and even more preferably 20 dL/g or more and 30 dL/g or less.

The limiting viscosity of the maleic anhydride-modified ultra-high molecular weight polyethylene can be measured as follows.

The maleic anhydride-modified ultra-high molecular weight polyethylene is used as a sample, and the sample is diluted with decalin to obtain a plurality of dilutions having a different sample concentration. The flow-down time of each dilution is measured with a capillary viscometer at a measurement temperature of 135°C to determine a reduced viscosity. The relationship between the sample concentration and the reduced viscosity is plotted and extrapolated by linear approximation to define the intercept as the limiting viscosity (dL/g).

The molecular weight of the maleic anhydride-modified ultra-high molecular weight polyethylene in the present embodiment is preferably 1,000,000 or higher and 3,500,000 or lower, and more preferably 1,250,000 or higher and 3,000,000 or lower.

The molecular weight of the maleic anhydride-modified ultra-high molecular weight polyethylene can be determined by calculating the viscosity average molecular weight from the above limiting viscosity based on the following formula (Mv-1).

$$\text{Viscosity average molecular weight Mv} = 5.37 \times 10^4 \times [\eta]^{1.37} \quad \text{(Mv-1)}$$

$[\eta]$: limiting viscosity (dL/g), solvent: decalin, measurement temperature: 135°C

The maleic anhydride-modified ultra-high molecular weight polyethylene as described above may be a synthesized product or may be a commercially available product. Examples of the commercially available product include MODIFIED LUBMER (R) manufactured by Mitsui Chemicals, Inc.

The resin composition of the present embodiment may contain one type of the maleic anhydride-modified ultra-high molecular weight polyethylene or may contain two or more types of the maleic anhydride-modified ultra-high molecular weight polyethylene.

In the resin composition of the present embodiment, the content of the maleic anhydride-modified ultra-high molecular weight polyethylene may be 5% by mass or more, may be 5% by mass or more and 25% by mass or less, or may be 5% by mass or more and 20% by mass or less, based on the total mass of the resin composition.

<Carbon fiber>

The carbon fiber in the present embodiment may be a general carbon fiber obtained by firing a precursor (fiber for carbon fiber raw material). For example, the precursor is first subjected to flameproofing treatment in an oxidizing atmosphere, and the resulting flameproofed fiber is then fired at about 800 to about 2000°C in an inert gas atmosphere. If necessary, this is further fired in a higher-temperature inert gas. The carbon fiber may be one with a sizing agent applied on the surface thereof.

Examples of the type of the carbon fiber include polyacrylonitrile-based (hereinafter, sometimes also referred to as "PAN-based"), petroleum/coal pitch-based (hereinafter, sometimes also referred to as "pitch-based"), rayon-based, and lignin-based carbon fibers.

Examples of the PAN-based carbon fibers include "TORAYCA (R)," manufactured by Toray Industries, Inc., "Pyrofil (R)," manufactured by Mitsubishi Chemical Corporation, and "Tenax (R)," manufactured by Toho Tenax Co., Ltd.

Examples of the pitch-based carbon fibers include "DIALEAD (R)," manufactured by Mitsubishi Chemical Functional Products, Inc., "DONACARBO (R)," manufactured by Osaka Gas Chemicals Co., Ltd., and "KRECA (R)," manufactured by Kureha Chemical Industry Co., Ltd.

In addition, the carbon fiber is preferably a carbon fiber bundle obtained by bundling a plurality of single fibers, or a chopped carbon fiber.

The number average fiber diameter of the carbon fiber is, for example, 1 μm or more and 10 μm or less, and is preferably 5 μm or more and 8 μm or less.

When the number average fiber diameter of the carbon fiber is 1 μm or more, the carbon fiber is easily dispersed in the semi-aromatic polyamide. In addition, the carbon fiber is easy to handle during production of the resin composition. On the other hand, when the number average fiber diameter of the carbon fiber is 10 μm or less, the semi-aromatic polyamide is efficiently reinforced by the carbon fiber. Therefore, excellent mechanical strength can be imparted to a molded body obtained by molding the resin composition.

As the number average fiber diameter of the carbon fiber, the number average value of the values obtained by observing the carbon fiber with a scanning electron microscope (1000 magnifications) and measuring fiber diameters of 50 carbon fibers is employed.

Note that the fiber diameter of the carbon fiber in the resin composition or the molded body hardly changes due to melt kneading and is usually about the same as the fiber diameter of the carbon fiber before the melt kneading.

The number average fiber length of the carbon fiber in the resin composition is, for example, 10 μm or more and 400 μm or less, and is preferably 100 μm or more and 350 μm or less.

When the number average fiber length of the carbon fiber is equal to or more than the above lower limit value, the durability of the molded body obtained by molding the resin composition is more likely to be enhanced. On the other hand,

when the number average fiber length of the carbon fiber is equal to or less than the above upper limit value, the semi-aromatic polyamide is efficiently reinforced by the carbon fiber.

[Method for measuring number average fiber length of carbon fiber in resin composition]

The resin composition is heated in an air atmosphere to remove the resin and obtain an ashed residue containing the carbon fiber. A sample solution is obtained by mixing the ashed residue with ethylene glycol. Next, the carbon fiber in a solution obtained by diluting the sample solution five-fold with ethylene glycol is imaged one by one using a particle shape image analyzer. The imaged carbon fiber is observed to read the length in the longitudinal direction as the fiber length. The measurement is completed when the number of measured carbon fibers reaches 10,000 to determine the arithmetic mean value of the obtained fiber lengths of 10,000 carbon fibers, and the value is defined as the number average fiber length of the carbon fiber.
The resin composition of the present embodiment may contain one type of the carbon fiber or may contain two or more types of the carbon fiber.
The content of the carbon fiber in the resin composition of the present embodiment is, for example, 10% by mass or more, and may be 10% by mass or more and 60% by mass or less, or may be 20% by mass or more and 40% by mass or less, based on the total mass of the resin composition.
In the resin composition of the present embodiment, the content mass ratio (carbon fiber/semi-aromatic polyamide) of the carbon fiber to the semi-aromatic polyamide having a structural unit represented by the above formula (1) is 0.25 or more and 0.95 or less, and preferably 0.25 or more and 0.90 or less.
When the mass ratio (carbon fiber/semi-aromatic polyamide) is equal to or lower than the upper limit value of the above numerical value range, wear (abrasive wear) caused by carbon fibers is unlikely to occur when the resin composition is made into a molded body, and on the other hand, when the mass ratio is equal to or more than the lower limit value of the above numerical value range, adhesive wear at the interface with a mating material is unlikely to occur.
In the resin composition of the present embodiment, the content mass ratio (carbon fiber/maleic anhydride-modified ultra-high molecular weight polyethylene) of the carbon fiber to the maleic anhydride-modified ultra-high molecular weight polyethylene is 0.8 or more and 6.5 or less, and preferably 1.0 or more and 6.0 or less.
When the mass ratio (carbon fiber/ maleic anhydride-modified ultra-high molecular weight polyethylene) is equal to or lower than the upper limit value of the above numerical value range, wear (abrasive wear) caused by carbon fibers is unlikely to occur when the resin composition is made into a molded body, and on the other hand, when the mass ratio is equal to or more than the lower limit value of the above numerical value range, adhesive wear at the interface with a mating material in contact with the molded body is unlikely occur.

<Other components>

The resin composition of the present embodiment may contain other components that do not correspond to any of the above-described semi-aromatic polyamide, maleic anhydride-modified ultra-high molecular weight polyethylene, and carbon fiber.
Examples of the other components include a filler other than the carbon fiber, an additive, and, in addition, a resin that does not correspond to the semi-aromatic polyamide and the maleic anhydride-modified ultra-high molecular weight polyethylene (hereinafter, sometimes referred to as "additional resin").
The other components may be used singly or in combinations of two or more.
The filler other than the carbon fiber may be a fibrous filler or a granular filler. In addition, the filler other than the carbon fiber may be an inorganic filler or may be an organic filler.
Examples of the additive include a stabilizer, a release agent, an antioxidant, a heat stabilizer, an ultraviolet absorber, an antistatic agent, a surfactant, a flame retardant, and a colorant.
Examples of the additional resin include: thermoplastic resins such as polyester, polyphenylene sulfide, polyether ketone, polycarbonate, polyphenylene ether, polyetherimide, and a fluororesin; and thermosetting resins such as a phenol resin, an epoxy resin, a polyimide resin, and a cyanate resin.
In the resin composition of the present embodiment, the semi-aromatic polyamide having a structural unit represented by the above formula (1), maleic anhydride-modified ultra-high molecular weight polyethylene, carbon fiber, and other components are contained in such a way that the total of contents (% by mass) of these do not exceed 100% by mass.
As described above, in the resin composition of the present embodiment, the semi-aromatic polyamide having a structural unit represented by the above formula (1), maleic anhydride-modified ultra-high molecular weight polyethylene, and carbon fiber are used in combination.

(i) The maleic anhydride-modified ultra-high molecular weight polyethylene has a functional group that can be reacted

with the imino group (-NH-) of the semi-aromatic polyamide. Therefore, the dispersibility of the maleic anhydride-modified ultra-high molecular weight polyethylene into the semi-aromatic polyamide is good. It is considered that when a transfer film having low intermolecular force is formed on the surface of a mating material, friction force between a molded body containing the maleic anhydride-modified ultra-high molecular weight polyethylene and the mating material is weakened, which leads to excellent wear resistance.

(ii) In addition, in the resin composition of the present embodiment, the carbon fiber is contained in addition to the semi-aromatic polyamide and the maleic anhydride-modified ultra-high molecular weight polyethylene. It is considered that thereby the surface hardness of the molded body is enhanced, adhesive wear at the interface between the molded body and the mating material is made unlikely to occur, and wear loss at a high contact pressure in particular can be reduced.

(iii) Furthermore, it is considered that in the resin composition of the present embodiment, the mixing ratio of two components of the semi-aromatic polyamide and the maleic anhydride-modified ultra-high molecular weight polyethylene to the carbon fiber takes a particular value, thereby adhesive wear at the interface with the mating material is more unlikely to occur, and wear (abrasive wear) between the carbon fibers can be prevented.

Accordingly, according to the resin composition of the present embodiment, it is possible to produce a durable molded body that enables reduction of the wear loss at a high contact pressure.

The resin composition of the present embodiment is suitable as a molding material for a mechanical component such as a gear and is particularly suitable as a resin composition for molding a gear, to be used as a molding material for a gear.

The wear resistance of the molded body can be evaluated using, as an example, the wear loss of a hollow cylindrical test specimen in [Wear test] described below as an index.

[Wear test]

A hollow cylindrical test specimen (outer diameter 25.6 mm, inner diameter 20 mm, thickness 20 mm) is prepared using the resin composition as a molding material and using an injection molding machine under injection conditions of a cylinder temperature of 320 to 340°C, a metal mold temperature of 140°C, a back pressure of 8 MPa, a number of screw revolutions of 80 rpm, an injection speed of 30 mm/s, an injection pressure of 150 MPa, an injection time of 0.7 seconds, a dwelling pressure of 80 MPa, and a cooling time of 25 seconds.

The wear loss (mg) is measured in a room adjusted to 23°C under the following wear test conditions using a Suzuki-type friction/wear tester (ring on ring).

Wear test conditions

Mating material: Hollow cylindrical carbon steel S45C (Ra: 0.02 mm or less) having outer diameter of 25.6 mm, inner diameter of 20 mm, and thickness of 30 mm

Test temperature: 23°C

Test speed (peripheral speed): 60 m/min, number of revolutions 838 rpm

Test time: 360 min

The durability of the molded body can be evaluated using, as an example, the total number of revolutions until the resin gear is destructed in the [Durability test] described below as an index.

[Durability test]

In a power-absorbing gear running tester shown in JIS B 1759, a metal master gear as a drive gear and a resin gear to be tested are engaged and installed.

The tester is operated under the conditions of a load torque to the resin gear of 5 N·m, a revolution speed of 1000 rpm, a non-lubricating condition, a temperature of 23°C, and a relative humidity of 50%RH to measure the total number of revolutions until the resin gear is destructed.

Note that the "destruction" of the resin gear in the durability test as referred to here is defined as a state in which the power cannot be transferred from the metal master gear that is a drive gear to the resin gear due to breakage of the teeth of the resin gear or other reasons.

[Method for producing resin composition]

The resin composition of the embodiment described above can be produced by mixing the semi-aromatic polyamide having a structural unit represented by the above formula (1), the maleic anhydride-modified ultra-high molecular weight polyethylene, the carbon fiber, and, if necessary, other components. In that case, the semi-aromatic

polyamide, the maleic anhydride-modified ultra-high molecular weight polyethylene, and the carbon fiber, and, if necessary, other components are blended in such a way that the total of contents (% by mass) of those in the intended resin composition does not exceed 100% by mass. In addition, those are each blended in such a way that the content mass ratio of the carbon fiber to the semi-aromatic polyamide is 0.25 or more and 0.95 or less, and the content mass ratio of the carbon fiber to the maleic anhydride-modified ultra-high molecular weight polyethylene is 0.8 or more and 6.5 or less.

One embodiment of such a method for producing the resin composition is a production method including a step of mixing the semi-aromatic polyamide having a structural unit represented by the above formula (1), the maleic anhydride-modified ultra-high molecular weight polyethylene, and the carbon fiber.

As another aspect, the present disclosure further includes the following modes.

[7] A resin composition comprising: a semi-aromatic polyamide having a structural unit represented by the following formula (1); maleic anhydride-modified ultra-high molecular weight polyethylene; and a carbon fiber,

wherein a content mass ratio of the carbon fiber to the semi-aromatic polyamide is 0.25 or more and 0.95 or less, a content mass ratio of the carbon fiber to the maleic anhydride-modified ultra-high molecular weight polyethylene is 0.8 or more and 6.5 or less, and
the content of the carbon fiber is 20% by mass or more based on the total mass of the resin composition.

[Formula 3]

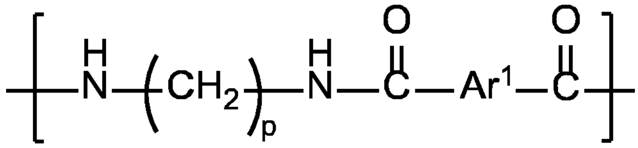
(1)

wherein $Ar^1$ represents a phenylene group or a naphthylene group, and a plurality of $Ar^1$s of the semi-aromatic polyamide are the same as or different from one another; and p is an integer of 4 to 12.

[8] The resin composition according to any one of [1] to [5] and [7], wherein the maleic anhydride-modified ultra-high molecular weight polyethylene has a limiting viscosity of 10 dL/g or more and 40 dL/g or less.

(Molded body)

One embodiment of the molded body contains the resin composition of the embodiment described above.

As the molded body of the present embodiment, a molded body obtained using, as a molding material, the resin composition of the embodiment described above can be given as an example.

The molding method from the resin composition to the molded body is not particularly limited, but melt molding is preferred, and examples thereof include extrusion molding, T-die molding, blow molding, and injection molding, and a molding method according to the shape and the like of the molded body can be selected.

The molded body of the present embodiment can be applied to all uses to which a resin composition can be generally applied. Examples of the molded body of the present embodiment include electrical and electronic components such as connectors, sockets, relay components, coil bobbins, optical pickups, oscillators, printed wiring boards, circuit boards, semiconductor packages, and computer-related components; semiconductor production process-related components such as IC trays and wafer carriers; home electric appliance components such as VTRs, televisions, irons, air conditioners, stereos, vacuum cleaners, refrigerators, rice cookers, and lighting apparatus; lighting apparatus components such as lamp reflectors and lamp holders; audio product components such as compact discs, laser disc (R), and speakers; communication device components such as ferrules for optical cables, telephone components, facsimile components, and modems; copier and printer-related components such as separation claws and heater holders; machine components such as impellers, fan gears, gears, bearings, and motor components and cases; automobile components such as automobile mechanism components, engine components, components in an engine room, electrical components, and interior components; cooking utensils such as microwave cooking pots and heat-resistant tableware; heat insulating and soundproofing materials such as floor materials and wall materials, support materials such as beams and columns, building materials such as roof materials, and materials for civil engineering and construction; components for aircraft, spacecraft, and space devices; radiation facility members such as nuclear reactors, marine facility members, cleaning jigs, optical device components, valves, pipes, nozzles, filters, membranes, medical device components and medical materials, components for sensors, sanitary fixtures, sporting goods, leisure equipment, and binding bands.

The molded body of the present embodiment uses, as a molding material, the resin composition of the embodiment described above, and therefore the durability is improved. Therefore, the molded body of the present

embodiment is suitable for sliding uses among others and is suitable as, for example, a sealing member in a compressor or a mechanical component such as a gear among the sliding uses, and can be utilized suitably as a gear in particular.

Examples of the type of the gear include a spur gear, a helical gear, a rack, an internal gear, a worm gear, a worm wheel gear, a bevel gear, and a hypoid gear.

## Examples

Hereinafter, the present disclosure will be described more specifically with reference to Examples, but the present disclosure is not limited by the following Examples.

<Production of resin composition>

Each resin composition having a composition and mass ratios shown in Table 1 was produced.

As the semi-aromatic polyamide, the maleic anhydride-modified polyolefin, and the carbon fiber, the following ones were respectively used.

• Semi-aromatic polyamide

Semi-aromatic polyamide (P1): Semi-aromatic polyamide having structural unit represented by formula (1) wherein $Ar^1$ is 1,4-phenylene group and p is 10 in formula (1). Melt mass flow rate (MFR) at 330°C is 24 g/10 min.

Semi-aromatic polyamide (P2): "GENESTAR (R) N1000A" manufactured by Kuraray Co., Ltd., semi-aromatic polyamide having a structural unit represented by formula (1) wherein $Ar^1$ is 1,4-phenylene group and p is 9 in formula (1). MFR at 330°C is 20 g/10 min.

The MFRs of the semi-aromatic polyamides were measured in accordance with JIS K 7210 at a test temperature of 330°C with a load of 2160 g.

• Maleic anhydride-modified polyolefin

Maleic anhydride-modified polyolefin (1): Maleic anhydride-modified ultra-high molecular weight polyethylene, "LUBMER (R) LY1040" manufactured by Mitsui Chemicals, Inc., limiting viscosity [η] measured in a decalin solvent at 135°C is 25 dL/g.

Maleic anhydride-modified polyolefin (2): Maleic anhydride-modified polyethylene, "ADMER (R) HE810" manufactured by Mitsui Chemicals, Inc., limiting viscosity [η] measured in a decalin solvent at 135°C is 1.2 dL/g.

• Carbon fiber

"Pyrofil (R) Chopped fiber TR03M," manufactured by Mitsubishi Chemical Corporation, PAN-based carbon fiber, fiber length 3 mm, number average fiber diameter 7 μm.

(Examples 1 to 6 and Comparative Examples 1 to 7)

In a twin-screw extruder (manufactured by Ikegai Corp, PCM-30), the semi-aromatic polyamide, the maleic anhydride-modified polyolefin, and the carbon fiber were charged according to the composition described in Table 1 to perform melt kneading under conditions of a barrel temperature of 310 to 350°C, a number of screw revolutions of 150 rpm, and a discharge amount of 5 kg/minute under deaeration to discharge the resulting mixture in a strand shape through a circular nozzle (discharge port) and pelletize the discharged mixture with a strand cutter through a belt conveyor with a water-cooling system (manufactured by ISUZU KAKOKI Co., Ltd.), and thus pellet-shaped resin compositions of Examples and Comparative Examples were obtained.

<Production of resin gear>

The pellet-shaped resin composition was put into an injection molding machine to perform injection molding under injection conditions of a cylinder temperature of 330 to 350°C, a metal mold temperature of 140°C, a back pressure of 10 MPa, a number of screw revolutions of 100 rpm, an injection pressure of 100 MPa, an injection speed of 50 mm/s, an injection time of 8 seconds, a dwelling pressure of 70 MPa, and a cooling time of 25 seconds, and thus a resin gear was produced.

The resin gear was produced as a resin gear having a gear shape of a spur gear, a module of 1, a number of teeth of 48, a pressure angle of 20°, a reference diameter of 48 mm, a tip diameter of 50 mm, a root diameter of 45.5 mm, a face

width of 8 mm, a profile shift coefficient of 0, and a span measurement of 16.909 (a number of teeth in the span of 6). The shape of produced resin gears is shown in Figure 1.

<Evaluation>

The produced resin gears were subjected to the following wear test and durability test.

[Wear test]

A hollow cylindrical test specimen (outer diameter 25.6 mm, inner diameter 20 mm, thickness 20 mm) was prepared using, as a molding material, a pellet of each of the resin compositions of Examples and Comparative Examples and using an injection molding machine (Injection Molding Machine SE100EV-A, manufactured by Sumitomo Heavy Industries, Ltd.) under injection conditions of a cylinder temperature of 320 to 340°C, a metal mold temperature of 140°C, a back pressure of 8 MPa, a number of screw revolutions of 80 rpm, an injection speed of 30 mm/s, an injection pressure of 150 MPa, an injection time of 0.7 seconds, a dwelling pressure of 80 MPa, and a cooling time of 25 seconds.

The wear loss (mg) was measured in a room adjusted to 23°C under the following wear test conditions using a Suzuki-type friction/wear tester (manufactured by TAKACHIHO SEIKI CO., LTD., ring on ring). This measurement was conducted for 5 samples to determine the average values of those. The results are shown in Table 1.

In Table 1, "*1" indicates that the wear was too significant to measure.

Wear test conditions
Mating material: Hollow cylindrical carbon steel S45C (Ra: 0.02 mm or less) having outer diameter of 25.6 mm, inner diameter of 20 mm, and thickness of 30 mm
Test temperature: 23°C

Test speed (peripheral speed): 60 m/min, number of revolutions 838 rpm
Load (contact pressure): 176 N, 58 N
Test time: 360 min

[Durability test]

In a power-absorbing gear running tester shown in JIS B 1759, a metal master gear [material: SCM420 carburizing, quenching, and tempering treatment (surface-cured treatment), quenched and cured layer depth 0.8 to 1.2, hardness HRC 55 to 60, gear shape: spur gear, module 1, number of teeth 67, pressure angle 20°, reference diameter 67 mm, tip diameter 69 mm, root diameter 64.5 mm, face width 15 mm, profile shift coefficient 0, and span measurement 23.079 (number of teeth in span 8)] as a drive gear and the produced resin gear were engaged and installed.

The tester was operated under the conditions of a load torque to the resin gear of 5 N·m, a revolution speed of 1000 rpm, a non-lubricating condition, a temperature of 23°C, a relative humidity of 50%RH, and a back lash of 0.1 mm in the normal line direction to measure the total number of revolutions until the resin gear was destructed. The results are shown in Table 1.

Note that the "destruction" of the resin gear in the present durability test was defined as a state in which the power cannot be transferred from the metal master gear that is a drive gear to the resin gear due to breakage of the teeth of the resin gear or other reasons.

[Table 1]

| Resin composition | | | Example 1 | Example 2 | Example 3 | Example 4 | Example 5 | Comparative Example 1 | Comparative Example 2 | Comparative Example 3 | Comparative Example 4 | Comparative Example 5 | Example 6 | Comparative Example 6 | Comparative Example 7 |
|---|---|---|---|---|---|---|---|---|---|---|---|---|---|---|---|
| Composition % by mass | Semi-aromatic polyamide (P1) p in formula (1) is 10, MFR at 330°C 24 g/10 min | | 60 | 65 | 45 | 65 | 60 | 85 | 55 | 70 | 90 | 80 | | | 60 |
| | Semi-aromatic polyamide (P2) p in formula (1) is 9, MFR at 330°C 20 g/10 min | | | | | | | | | | | | 60 | 70 | |
| | Maleic anhydride-modified polyolefin (1) Limiting viscosity [η] is 25 dL/g | | 10 | 15 | 15 | 5 | 20 | 5 | 5 | | 10 | 4 | 20 | | |
| | Maleic anhydride-modified polyolefin (2) Limiting viscosity [η] is 1. 2 dL/g | | | | | | | | | | | | | | 10 |
| | Carbon fiber | | 30 | 20 | 40 | 30 | 20 | 10 | 40 | 30 | | 16 | 20 | 30 | 30 |
| Content mass ratio of carbon fiber to semi-aromatic polyamide | | | 0.50 | 0.31 | 0.89 | 0.46 | 0.33 | 0.12 | 0.73 | 0.43 | 0 | 0.20 | 0.33 | 0.43 | 0.50 |
| Content mass ratio of carbon fiber to maleic anhydride-modified polyolefin | | | 3.0 | 1.3 | 2.7 | 6.0 | 1.0 | 2.0 | 8.0 | - | 0 | 4.0 | 1.0 | - | 3.0 |
| Evaluation | Wear resistance | Wear loss (mg) in wear test (contact pressure 176 N) | 35 | 24 | 35 | 49 | 18 | 76 | *1 | *1 | 71 | *1 | 48 | *1 | - |
| | | Wear loss (mg) in wear test (contact pressure 58 N) | - | 7.0 | - | - | - | - | - | 7.0 | - | - | - | - | - |
| | Durability | Durability test for resin gear (torque: 5 N·m) Total number of revolutions until gear is destructed | $9.2\times10^6$ | $1.5\times10^7$ | $1.2\times10^7$ | $9.8\times10^6$ | $8.9\times10^6$ | $4.7\times10^6$ | $4.8\times10^6$ | $4.9\times10^6$ | $3.2\times10^6$ | $4.4\times10^6$ | $8.1\times10^6$ | $4.8\times10^6$ | - |

Results of wear test:

From the comparison between Example 2 and Comparative Example 3, it can be confirmed that for the test specimen obtained using, as a molding material, the pellet of the resin composition in which maleic anhydride-modified polyolefin (1) was used in combination in addition to semi-aromatic polyamide (P1) and the carbon fiber, the wear loss is smaller particularly at a high contact pressure.

Furthermore, it can be confirmed that the resin compositions of Examples 1 to 6, in which the content mass ratio of the carbon fiber to the semi-aromatic polyamide is 0.25 or more and 0.95 or less, and the content mass ratio of the carbon fiber to maleic anhydride-modified polyolefin (1) is 0.8 or more and 6.5 or less, have more excellent wear resistance at a high contact pressure than that of the resin compositions of Comparative Examples 1, 2, and 5, in which the ranges of the mass ratios are not satisfied.

In addition, from the comparison between Example 1 and Comparative Example 7, it can be confirmed that the test specimen obtained using, as a molding material, the pellet of the resin composition in which ultra-high-molecular-weight maleic anhydride-modified polyolefin (1) is used in combination in addition to semi-aromatic polyamide (P1) and the carbon fiber has more excellent wear resistance at a high contact pressure.

Results of durability test:

It can be confirmed that the resin compositions of Examples 1 to 6 give a larger total number of revolutions until the resin gear is destructed and enhance the durability of the molded body more than the resin compositions of Comparative Examples 1 to 7.

It was shown that the resin compositions of Examples 1 to 6 are useful molding materials that make it possible to produce a resin gear having excellent durability and having excellent wear resistance at a high contact pressure.

Each configuration in each embodiment, a combination thereof, and the like are examples, and addition, omission, substitution of a configuration, and other modifications of a configuration are possible unless they depart from the scope of the present disclosure.

## Claims

1. A resin composition comprising:

   a semi-aromatic polyamide having a structural unit represented by the following formula (1);
   maleic anhydride-modified ultra-high molecular weight polyethylene; and
   a carbon fiber,
   wherein a content mass ratio of the carbon fiber to the semi-aromatic polyamide is 0.25 or more and 0.95 or less, and
   a content mass ratio of the carbon fiber to the maleic anhydride-modified ultra-high molecular weight polyethylene is 0.8 or more and 6.5 or less:

   [Formula 1]

   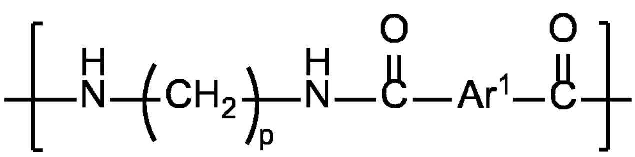

   (1)

   wherein $Ar^1$ represents a phenylene group or a naphthylene group, and a plurality of $Ar^1$s of the semi-aromatic polyamide are the same as or different from one another; and p is an integer of 4 to 12.

2. The resin composition according to claim 1, wherein the semi-aromatic polyamide is a semi-aromatic polyamide having a structural unit wherein $Ar^1$ represents a 1,4-phenylene group and p is 9 or 10 in formula (1).

3. The resin composition according to claim 1 or 2, wherein the semi-aromatic polyamide has a melt mass flow rate (MFR) of 1 g/10 min or more and 300 g/10 min or less, as measured in accordance with JIS K 7210 at a test temperature of 330°C with a load of 2160 g.

**4.** The resin composition according to any one of claims 1 to 3, wherein a content of the carbon fiber is 20% by mass or more based on the total mass of the resin composition.

**5.** The resin composition according to any one of claims 1 to 4, wherein the maleic anhydride-modified ultra-high molecular weight polyethylene has a limiting viscosity of 10 dL/g or more and 40 dL/g or less.

**6.** A molded body comprising the resin composition according to any one of claims 1 to 5.

[Figure 1]

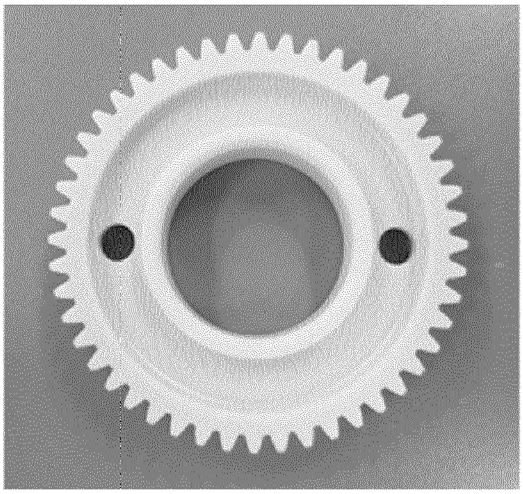

Europäisches Patentamt
European Patent Office
Office européen des brevets

# EUROPEAN SEARCH REPORT

Application Number
EP 25 18 9901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2021 059707 A (UNITIKA LTD)<br>15 April 2021 (2021-04-15)<br>* paragraph [0024] *<br>* paragraph [0034] *<br>* examples 10-12,16,17; table 2 *<br>* claims *<br>----- | 1-6 | INV.<br>C08K7/06<br>C08L77/06<br>F16C33/20 |
| A | JP 2020 200431 A (TEIJIN LTD)<br>17 December 2020 (2020-12-17)<br>* paragraph [0042] *<br>* paragraph [0092] *<br>* examples *<br>* claims *<br>----- | 1-6 | |

| TECHNICAL FIELDS SEARCHED (IPC) |
|---|
| C08K<br>C08L<br>F16C |

The present search report has been drawn up for all claims

| Place of search | Date of completion of the search | Examiner |
|---|---|---|
| Munich | 13 November 2025 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

1

EPO FORM 1503 03.82 (P04C01)

## ANNEX TO THE EUROPEAN SEARCH REPORT ON EUROPEAN PATENT APPLICATION NO.

EP 25 18 9901

This annex lists the patent family members relating to the patent documents cited in the above-mentioned European search report. The members are as contained in the European Patent Office EDP file on
The European Patent Office is in no way liable for these particulars which are merely given for the purpose of information.

13-11-2025

| Patent document cited in search report | Publication date | Patent family member(s) | Publication date |
|---|---|---|---|
| JP 2021059707 A | 15-04-2021 | NONE | |
| JP 2020200431 A | 17-12-2020 | JP 7343312 B2 | 12-09-2023 |
| | | JP 2020200431 A | 17-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023010587 A